# DEMANDE DE BREVET EUROPEEN

(11) **EP 4 162 794 A1**
(43) Date de publication de la demande: **12.04.2023**
(21) Numéro de dépôt: 22199819.8
(22) Date de dépôt: 05.10.2022
(51) Int. Cl.: A01K 5/00, A01K 5/02, B62B 3/00

(54) **CHARIOT ROULANT POUR LE TRANSPORT ET LA DISTRIBUTION DE PRODUITS D'ALIMENTATION POUR ANIMAUX**

(30) Priorité: 06.10.2021 FR 2110578
(71) Demandeur: Polymoule, 72550 Coulans sur Gee (FR)
(72) Inventeur: COSNET, GILBERT, 72550 Degré (FR)
(74) Mandataire: Jacobacci Coralis Harle

(57) **Abrégé**

La présente invention concerne un chariot (1) roulant pour le transport et la distribution de produits d'alimentation pour animaux,
lequel chariot (1) comprend : - une cuve (2) en matière plastique, - un essieu (31) composé d'un axe d'essieu (311) et de deux roues d'essieu (312), lequel axe d'essieu (311) est porté par un support d'essieu (313),et - au moins une roue directionnelle (32) montée sur un support de roue(s) directionnelle(s) (33) ;

Selon l'invention, le support d'essieu (313) se présente sous la forme d'un berceau d'essieu qui est fixé sur la surface externe de la cuve (2), de part et d'autre d'un plan médian longitudinal de cuve, au moyen de systèmes de fixation de type vis/écrous (5) qui traversent la paroi de cuve (2a).

## Description

### Domaine technique de l'invention

La présente invention concerne le domaine général de l'agriculture et en particulier le domaine technique des accessoires pour l'élevage d'animaux.

Elle concerne plus particulièrement un chariot roulant pour le transport et la distribution de produits d'alimentation pour animaux.

### Etat de la technique

Dans les élevages d'animaux (bovins, ovins, caprins, porcins, équins ou autres), les produits d'alimentation (par exemple sous la forme d'aliments granulés ou floconnés) peuvent être transportés et distribués au moyen de chariots roulants qui comprennent une cuve de grand volume en matière plastique, munie d'une ouverture supérieure, et qui est équipée d'une structure roulante pour son déplacement sur le sol.

Ces cuves comprennent un fond, deux parois longitudinales et deux parois d'extrémités. La section du fond, perpendiculaire à un plan médian longitudinal de cuve qui traverse les deux parois d'extrémités, peut comprendre deux côtés de fond qui convergent en direction d'une zone centrale de fond, de manière à faciliter la récupération du produit en fond de cuve (par exemple au moyen d'un seau ou d'une mesure à grains, généralement de forme cylindrique).

Pour des raisons de coût de production, du fait de leur grande dimension, les cuves de ce genre sont généralement réalisées par une technique de roto-moulage (par exemple en un matériau tel que le polyéthylène).

La structure roulante du chariot doit être très résistante du fait du poids généralement important des produits à transporter, et aussi du fait de l'environnement et des risques de contacts avec les animaux.

Cette structure roulante doit aussi permettre à un opérateur de manœuvrer facilement le chariot pour permettre son utilisation sur toute configuration de site et notamment dans des endroits exigus.

Pour cela, de manière classique la structure roulante comprend - un essieu composé d'un axe d'essieu et de deux roues d'essieu, et - une voire deux roues directionnelles capables de pivoter autour d'un axe vertical.

L'axe d'essieu est généralement monté sur deux oreilles monobloc qui s'étendent vers le bas à partir du fond de la cuve.

Cependant, lors du procédé de fabrication par roto-moulage, ces oreilles monobloc créent des retraits de matière qui forment des cavités (ou des zones en creux) à l'intérieur de la cuve, dans lesquelles les produits stockés peuvent pénétrer, stagner et éventuellement se dégrader dans le temps.

De plus ces oreilles monobloc creuses doivent être percées pour permettre le passage de l'axe d'essieu, ce qui nuit aux caractéristiques d'étanchéité de la cuve.

### Présentation de l'invention

Afin de remédier aux inconvénients précités de l'état de la technique, la présente invention propose un chariot roulant pour le transport et la distribution de produits d'alimentation pour animaux, lequel chariot est du type comprenant :
- une cuve en matière plastique pour le stockage desdits produits d'alimentation, laquelle cuve comprend une bordure périphérique de cuve qui délimite une ouverture supérieure de cuve,
- un essieu composé d'un axe d'essieu et de deux roues d'essieu, lequel axe d'essieu est porté par un support d'essieu,
- au moins une roue directionnelle montée sur un support de roue(s) directionnelle(s), laquelle cuve comprend une paroi de cuve délimitée par une surface externe de cuve et une surface interne de cuve,
   et laquelle cuve comprend un plan médian longitudinal de cuve, deux parois d'extrémité traversées par ledit plan médian longitudinal de cuve, deux parois longitudinales et un fond de cuve,
   la section dudit fond de cuve perpendiculaire audit plan médian longitudinal de cuve comprenant deux côtés de fond qui convergent en direction d'une zone centrale de fond située dans ledit plan médian longitudinal de cuve,
   ce chariot roulant étant caractérisé par le fait que ledit support d'essieu se présente sous la forme d'un berceau d'essieu qui est fixé sur ladite surface externe de cuve, de part et d'autre dudit plan médian longitudinal de cuve, au moyen de systèmes de fixation de type vis/écrous qui traversent ladite paroi de cuve.

L'essieu rapporté d'un tel chariot n'a donc pas d'influence sur la forme de la cuve, et on peut obtenir, par une technique de roto-moulage, une cuve dont le fond est à section cylindrique ou sensiblement cylindrique, sans cavité de rétention.

Les systèmes de fixation de type vis/écrous créent des parties en saillie dans le fond de la cuve, mais qui ne forment pas de structures de rétention pour les produits d'alimentation. En outre ces systèmes de fixation de type vis/écrous ne nuisent pas à l'étanchéité de la cuve.

Le berceau d'essieu peut s'étendre sur une majeure partie de la largeur du chariot, assurant ainsi un support de grande stabilité et permettant un positionnement des systèmes vis/écrou au niveau des extrémités dudit berceau, dans des zones latérales du fond de cuve assez éloignées de la zone centrale de fond pour ne pas gêner le prélèvement des produits (au moyen d'un contenant de prélèvement tel qu'un seau ou une mesure à grains), notamment lorsqu'il reste peu de produit(s) dans le fond de la cuve

D'autres caractéristiques non limitatives et avantageuses du chariot roulant conforme à l'invention, prises individuellement ou selon toutes les combinaisons techniquement possibles, sont les suivantes :
- le support de roue(s) directionnelle(s) se présente également sous la forme d'un berceau support de roue(s) directionnelle(s) qui est fixé sur la surface externe de cuve, de part et d'autre dudit plan médian longitudinal de cuve, au moyen de systèmes de fixation de type vis/écrous qui traversent la paroi de cuve ;
- les deux côtés de fond sont à section en arc de cercle qui convergent en direction d'une zone centrale de fond en forme de ligne de fond ou de plan de fond, ledit berceau d'essieu, et éventuellement ledit berceau support de roue(s) directionnelle(s), comprennent deux ailes latérales dont une face est conformée pour épouser la forme desdits côtés de fond,
et lesdits systèmes de fixation de type vis/écrous sont ménagés au niveau d'une partie supérieure desdites ailes latérales, et au niveau d'une partie supérieure desdits côtés de fond, à distance de ladite zone centrale de fond ;
- les zones de contact entre la partie supérieure desdits côtés de fond et la partie supérieure desdites ailes latérales comprennent des méplats assurant un contact plan pour la fixation par lesdits systèmes de fixation de type vis/écrous ;
- les têtes de vis desdits systèmes de fixation de type vis/écrous sont disposées du côté de la surface interne de cuve, lesquelles têtes de vis ont une forme générale en dôme.
- le chariot comprend un groupe d'une pluralité de systèmes de fixation de type vis/écrou pour la fixation dudit berceau d'essieu, et éventuellement dudit berceau support de roue(s) directionnelle(s), de part et d'autre dudit plan médian longitudinal de cuve.
- le chariot comprend un plan horizontal supérieur de roues d'essieu, par lequel passent les génératrices supérieures desdites roues d'essieu en position normale d'appui au sol,
et lesdits systèmes de fixation de type vis/écrou sont ménagés à proximité de ce plan horizontal supérieur de roues d'essieu ;
- les deux côtés de fond se prolongent par les parois longitudinales, planes, lesquelles parois longitudinales s'étendent vers le haut de manière divergente, et lesdits systèmes de fixation de type vis/écrous sont ménagés sur lesdits deux côtés de fond, à proximité desdites parois longitudinales ;
- le berceau d'essieu comprend une face supérieure de fixation contre ladite paroi de cuve, et une face inférieure, opposée à ladite face supérieure, laquelle face inférieure comprend deux ailes latérales d'essieu munies d'orifices pour le passage de l'axe d'essieu, et une voûte d'appui demi cylindrique, pour l'appui dudit axe d'essieu, située entre lesdites ailes latérales d'essieu,
   et ledit berceau d'essieu comprend au moins un étrier de fixation, agencé pour fixer ledit axe d'essieu dans ladite voûte d'appui demi cylindrique.
- le berceau support de roue(s) directionnelle(s) comprend une face supérieure de fixation contre ladite paroi de cuve, et une face inférieure, opposée à ladite face supérieure, sur laquelle est fixée ladite au moins une roue directionnelle.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
La figure 1 est une vue en perspective d'un mode de réalisation d'un chariot roulant conforme à l'invention ;
La figure 2 est une vue de dessus du chariot roulant illustré sur la figure 1 ;
La figure 3 est une vue de côté du chariot roulant illustré sur les figures 1 et 2 ;
La figure 4 est une vue d'extrémité du chariot roulant illustré sur les figures 1 à 3;
La figure 5 est une vue en coupe du chariot roulant selon le plan de coupe 5-5 de la figure 4 ;
La figure 6 est une vue en coupe du chariot roulant selon le plan de coupe 6-6 de la figure 3 ;
La figure 7 est une vue en coupe du chariot roulant selon le plan de coupe 7-7 de la figure 3 ;
La figure 8 est une vue en perspective du berceau support d'essieu du chariot roulant illustré sur les figures 1 à 7 ;
La figure 9 est une vue en coupe longitudinale du berceau support d'essieu de la figure 8 ;
La figure 10 est une vue en perspective du berceau support de roue(s) directionnelle(s) du chariot roulant illustré sur les figures 1 à 7.

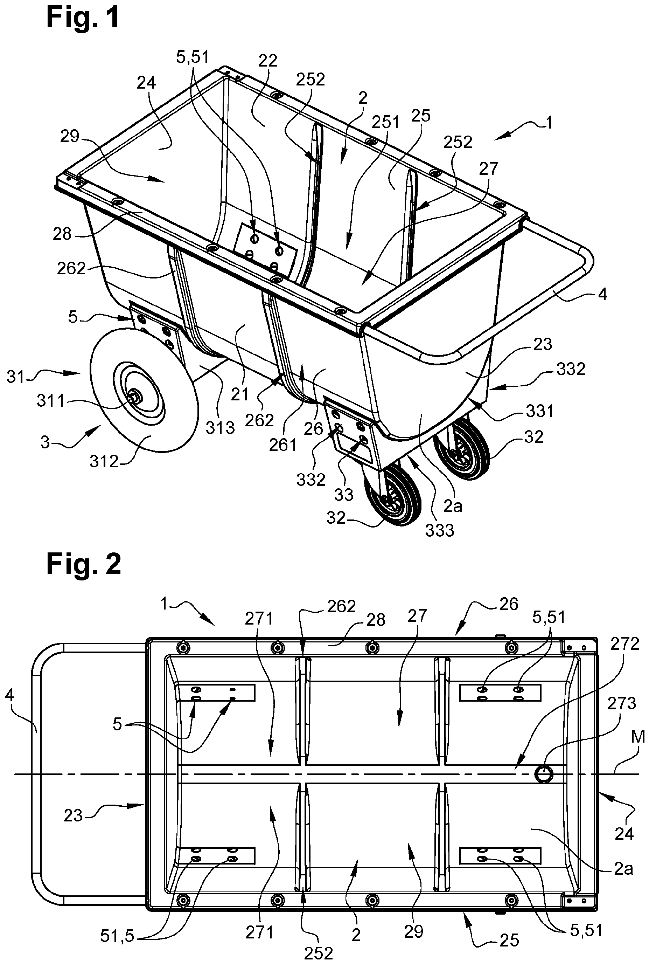

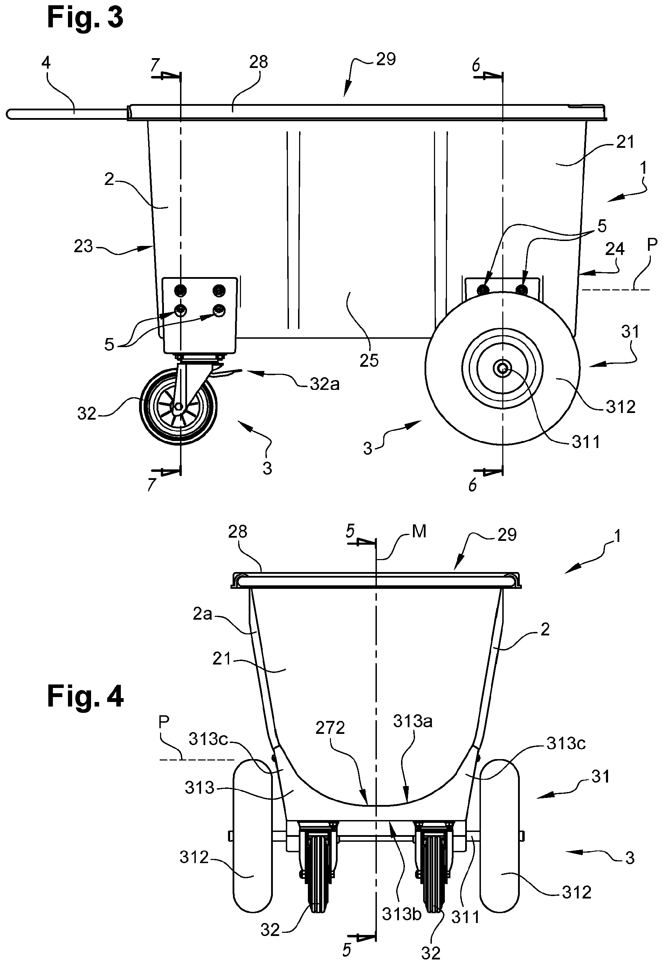

Le chariot roulant 1 illustré sur les figures 1 à 7 est adapté pour le transport et la distribution de produits d'alimentation pour animaux, par exemple des aliments granulés ou floconnés.

Ce chariot roulant 1 comprend une cuve 2 en matière plastique, destinée à la réception des produits d'alimentation, une structure de roulement 3 pour le déplacement sur le sol de la cuve 2, et une poignée de manœuvre 4 pour le déplacement de la cuve 2 par un opérateur.

La cuve 2 comprend une paroi de cuve 2a délimitée par une surface externe de cuve 21 et une surface interne de cuve 22.

La cuve 2 peut être réalisée monobloc en matériau de type polyéthylène, par une technique de roto-moulage.

La cuve 2 comprend un plan médian longitudinal de cuve M, deux parois d'extrémité 23, 24 qui sont traversées par ledit plan médian longitudinal de cuve M, deux parois longitudinales 25, 26 et un fond de cuve 27.

Les bordures supérieures des deux parois d'extrémité 23, 24 et des deux parois longitudinales 25, 26 forment une bordure périphérique de cuve 28 qui délimite une ouverture supérieure de cuve 29.

La cuve 2 est de préférence une cuve de grande capacité, par exemple comprise entre 150 et 500 L.

Les deux parois d'extrémité 23, 24 sont planes ou approximativement planes et elles s'étendent parallèlement l'une par rapport à l'autre. De leur côté, les deux parois longitudinales 25, 26 sont planes ou approximativement planes et leurs parties inférieures 251, 261 sont raccordées par le fond de cuve 27 dont la forme générale est en portion de tube ou approximativement en portion de tube (c'est-à-dire une forme générale cintrée ou incurvée, ou encore en forme de portion de cylindre).

Les deux parois longitudinales 25, 26 s'étendent de manière légèrement divergente du bas vers le haut.

Ainsi, la bordure inférieure des deux parois d'extrémité 23, 24 est en forme d'arc de cercle ou approximativement en forme d'arc de cercle. Et la section du fond de cuve 27, perpendiculaire au plan médian longitudinal de cuve M, comprend deux côtés de fond 271 qui convergent en direction d'une zone centrale de fond 272 située dans ledit plan médian longitudinal de cuve M.

Les deux côtés de fond 271 sont à section en arc de cercle.

Dans une variante de réalisation, la section de la cuve 2, perpendiculaire au plan médian longitudinal de cuve M, peut être en forme de portion de cylindre.

La zone centrale de fond 272 du fond de cuve 27 peut être formée d'une simple ligne de fond droite (horizontale en position normale d'utilisation du chariot) qui correspond à une ligne de liaison des deux côtés de fond 271.

Comme illustré sur les figures 2, 4, 6 et 7, cette zone centrale de fond 272 du fond de cuve 27 peut être formée d'un plan de fond de quelques centimètres de largeur (horizontal en position normale d'utilisation du chariot) qui correspond à un plan de liaison des deux côtés de fond 271.

Sur la figure 2 on remarque la présence d'un orifice d'évacuation 273 ménagé à l'une des extrémités de la zone centrale de fond 272, permettant la vidange de la cuve 2. Pour cela, cet orifice d'évacuation 273 est associé à un organe obturateur amovible.

Les deux parois longitudinales 25 et 26 de la cuve 2 peuvent également comprendre des rainures internes 252, 262 (en creux du côté de la surface interne de cuve 22 et en saillie du côté de la surface externe de cuve 21), adaptées pour le positionnement amovible de cloison(s) de séparation (non représentées).
Ces cloisons de séparation sont destinées à s'étendre parallèlement aux parois d'extrémités 23, 24 pour diviser le volume interne de la cuve 2, par exemple pour la réception de différents types de produits d'alimentation.

La structure de roulement 3 du chariot roulant 1 comprend :
- un essieu 31 composé d'un axe d'essieu 311, de deux roues d'essieu 312 et d'un support d'essieu 313, et
- au moins une roue directionnelle 32 (ici deux roues directionnelles 32) montée(s) sur un support de roue(s) directionnelle(s) 33.

L'essieu 31 est ménagé au niveau de l'une des extrémités du chariot 1, ici au niveau de l'extrémité opposée à la poignée de manœuvre 4. De leur côté, les roues directionnelles 32 sont ménagée au niveau de l'extrémité du chariot 1 qui est équipée de la poignée de manœuvre 4.

Le support d'essieu 313 se présente ici sous la forme d'un berceau d'essieu 313 qui est fixé sous la cuve 2, et sur la surface externe de cuve 21, de part et d'autre du plan médian longitudinal de cuve M, au moyen de systèmes de fixation de type vis/écrous 5 qui traversent la paroi de cuve 2a.

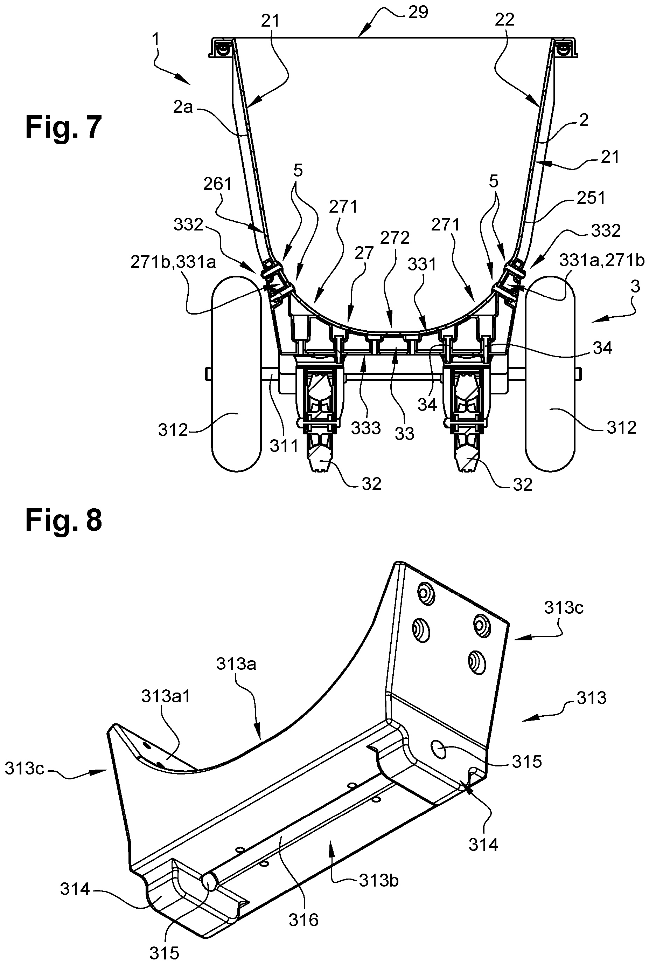

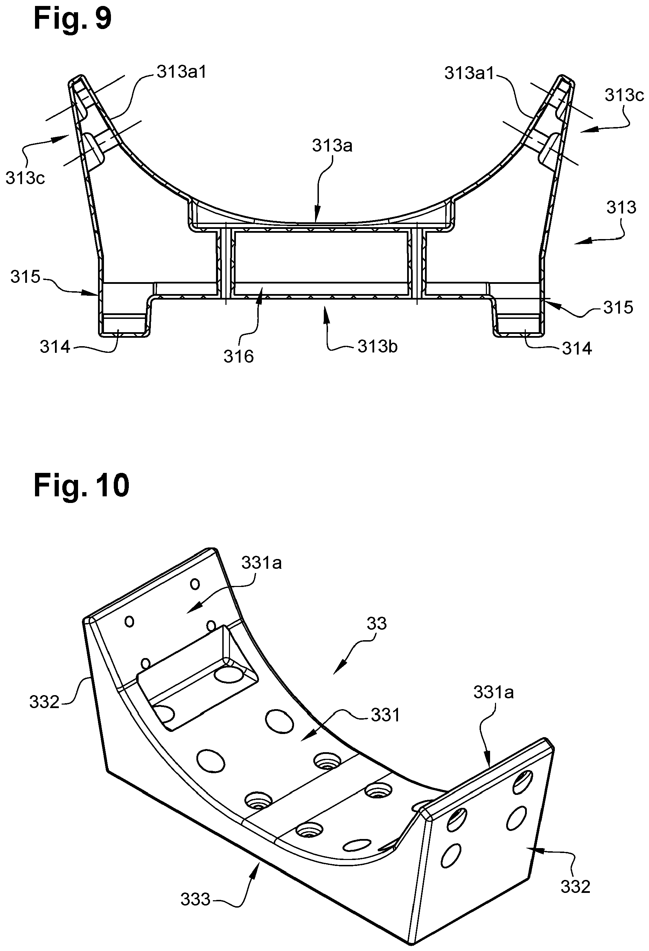

Le berceau d'essieu 313, représenté isolément sur les figures 8 et 9, se présente sous la forme d'une pièce en matière plastique (par exemple en polyéthylène roto-moulé) comprenant - une face supérieure 313a en forme générale d'arc de cercle adaptée pour épouser la surface externe de cuve 21 du fond de cuve 27, - une face inférieure 313b et - deux ailes latérales 313c.

Une face 313a1 des deux ailes latérales 313c est conformée pour épouser la forme des côtés de fond 271. Cette face 313a1 correspond à la partie supérieure de la face supérieure 313a en forme d'arc de cercle.

Le berceau d'essieu 313 s'étend sur toute la largeur du fond de cuve 27.

Les systèmes de fixation de type vis/écrous 5 sont ménagés au niveau d'une partie supérieure des ailes latérales 313c, et au niveau d'une partie supérieure des côtés de fond 271 du fond de cuve 27, cela à distance de la zone centrale de fond 272.

Les zones de contact entre la partie supérieure des côtés de fond 271 et la partie supérieure des ailes latérales 313c comprennent des méplats assurant un contact plan pour la fixation par les systèmes de fixation de type vis/écrous 5. La face 313a1 des deux ailes latérales 313c du berceau d'essieu 313 se présente donc sous la forme d'un méplat, tout comme la zone 271a en regard des côtés de fond 271.

Chaque aile latérales 313c est fixée par plusieurs systèmes de fixation de type vis/écrou 5, formant des groupes de systèmes de fixation de type vis/écrou 5. Dans le mode de réalisation illustré, chaque aile latérales 313c est fixée par un groupe de quatre systèmes de fixation de type vis/écrou 5.

Les systèmes de fixation de type vis/écrou 5 passent au travers d'orifices de fixation ménagés dans les ailes latérales 313c lors de la fabrication du berceau d'essieu 313.

Les groupes de systèmes de fixation de type vis/écrou 5 sont positionnés sur les méplats 271a, et 313a1.

Les têtes de vis 51 des systèmes de fixation de type vis/écrous 5 sont disposées du côté de la surface interne de cuve 22. On utilise de préférence des boulons (Vis + écrou) de type « poêlier », comprenant une tête de vis en forme de dôme, pour limiter le caractère saillant à l'intérieur de la cuve 2.

La face inférieure 313b du berceau d'essieu 313 comprend deux ailes latérales d'essieu 314 munies d'orifices 315 pour le passage de l'axe d'essieu 311.

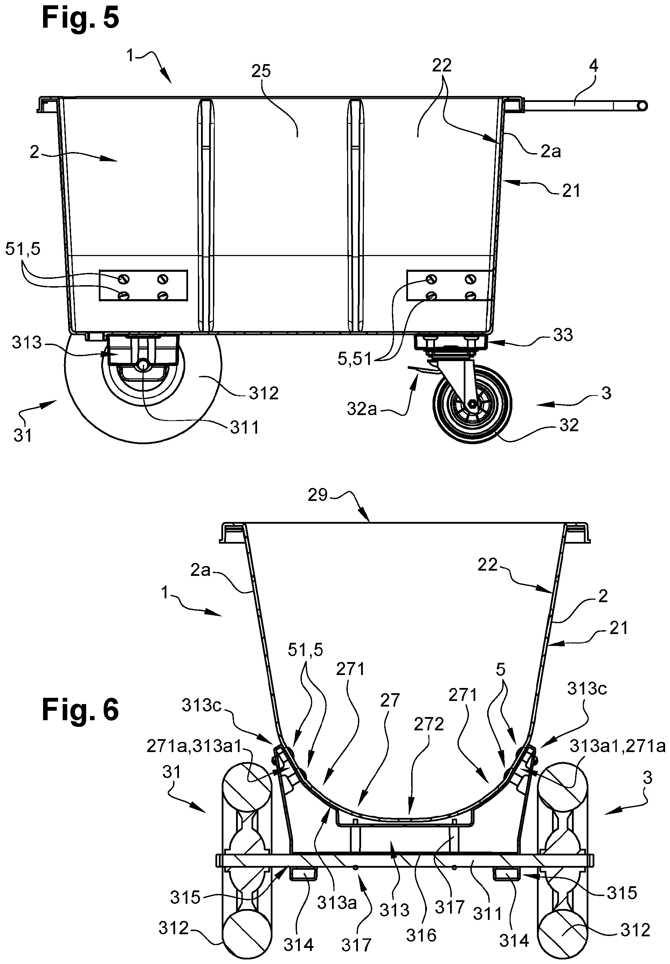

Cette face inférieure 313b du berceau d'essieu 313 comprend également une voûte d'appui 316 demi cylindrique, pour l'appui de l'axe d'essieu 311 entre les deux ailes latérales d'essieu 314 ; et au moins un étrier de fixation 317 (figure 6) est agencé pour fixer l'axe d'essieu 311 dans sa voûte d'appui 316, pour assurer sa solidarisation avec le berceau d'essieu 313.

Dans le mode de réalisation illustré, deux étriers de fixation 317 assurent la fixation et le blocage de l'axe d'essieu 311 dans la voûte d'appui 316.

Les deux étriers de fixation 317 consistent en des organes de crochetage en forme générale de U adaptés pour venir plaquer l'axe d'essieu 311 dans la voûte d'appui 316. Les deux branches latérales des étriers de fixation 317 traversent l'épaisseur du berceau d'essieu 313 par des orifices de fixation ménagés lors de la fabrication du berceau d'essieu 313 ; et les extrémités des étriers de fixation 317 coopèrent avec des écrous de fixation rapportés du côté de la face supérieure 313a du berceau d'essieu 313. Ces écrous de fixation sont intégrés dans l'épaisseur du berceau d'essieu 313 pour ne pas gêner son plaquage contre la surface externe de cuve 21.

Une telle structure d'essieu est très résistante et très stable.

Comme on peut le voir sur les figures annexées, le chariot 1 comprend un plan horizontal supérieur de roues d'essieu P, par lequel passent les génératrices supérieures des roues d'essieu 312 en position normale d'appui au sol, et les systèmes de fixation de type vis/écrou 5 (ou les groupes de systèmes de fixation de type vis/écrou 5) sont ménagés à proximité de ce plan horizontal supérieur de roues d'essieu P. Les groupes de systèmes de fixation de type vis/écrou 5 sont ainsi bien écartés de la zone centrale de fond 272.

L'axe d'essieu 311 consiste en un arbre métallique dont les extrémités supportent les deux roues d'essieu 312 par l'intermédiaire de roulements, par exemple des roulements à rouleaux graissés.

Ces deux roues d'essieu 312 sont situées de part et d'autre du fond de cuve 27, chacune dans, ou approximativement dans, le plan vertical passant par la bordure supérieure de la paroi longitudinale 25, 26 en regard.

Le support de roue(s) directionnelle(s) 33 se présente ici sous la forme d'un berceau support de roue(s) directionnelle(s) 33 qui est fixé sous la cuve 2, et sur la surface externe de cuve 21, de part et d'autre du plan médian longitudinal de cuve M, au moyen de systèmes de fixation de type vis/écrous 5 qui traversent la paroi de cuve 2a.

Le berceau support de roue(s) directionnelle(s) 33, représenté isolément sur la figure 10, est similaire au berceau d'essieu 313. Il se présente sous la forme d'une pièce en matière plastique (par exemple en polyéthylène roto-moulé) comprenant - une face supérieure 331 en forme générale d'arc de cercle adaptée pour épouser la surface externe de cuve 21 du fond de cuve 27, - deux ailes latérales 332, et - une face inférieure 333.

Une face 331a des deux ailes latérales 332 est conformée pour épouser la forme des côtés de fond 271. Cette face 331a correspond à la partie supérieure de la face supérieure 331 en forme d'arc de cercle.

Le berceau support de roue(s) directionnelle(s) 33 s'étend sur toute la largeur du fond de cuve 27.

Les systèmes de fixation de type vis/écrous 5 sont ménagés au niveau d'une partie supérieure des ailes latérales 332, et au niveau d'une partie supérieure des côtés de fond 271, cela à distance de la zone centrale 272.

Les zones de contact entre la partie supérieure des côtés de fond 271 et la partie supérieure des ailes latérales 332 comprennent des méplats assurant un contact plan pour la fixation par les systèmes de fixation de type vis/écrous 5. La face 331a des deux ailes latérales 332 du berceau support de roue(s) directionnelle(s) 33 se présente donc sous la forme d'un méplat, tout comme la zone 271b en regard des côtés de fond 271.

Chaque aile latérales 332 est fixée par plusieurs systèmes de fixation de type vis/écrou 5, formant des groupes de systèmes de fixation de type vis/écrou 5. Dans le mode de réalisation illustré chaque aile latérale 332 est fixée par un groupe de quatre systèmes de fixation de type vis/écrou 5.

Les systèmes de fixation de type vis/écrou 5 passent au travers d'orifices de fixation ménagés dans les ailes latérales 332 lors de la fabrication du berceau support de roue(s) directionnelle(s) 33.

Les groupes de systèmes de fixation de type vis/écrou 5 sont positionnés sur les méplats 271a, et 331a.

Les têtes de vis 51 des systèmes de fixation de type vis/écrous 5 sont disposées du côté de la surface interne de cuve 22. On utilise de préférence des boulons (Vis + écrou) de type « poêlier », comprenant une tête de vis en forme de dôme, pour limiter le caractère saillant à l'intérieur de la cuve 2.

Les deux roues directionnelles 32 consistent en des roues montées pivotantes autour d'un axe vertical de manière à faciliter les manœuvres du chariot 1. Elles sont fixées au-dessous du berceau support de roue(s) directionnelle(s) 33, sur sa face inférieure 333, au moyen de systèmes vis/écrous 34 (figure 7) qui traversent ledit berceau support de roue(s) directionnelle(s) 33. Les systèmes de fixation de type vis/écrou 34 passent au travers d'orifices de fixation ménagés dans le berceau support de roue(s) directionnelle(s) 33 lors de sa fabrication.

L'une des deux roues directionnelles 32 peut comporter un système de frein 32a activable/désactivable à la main ou au pied, adapté pour permettre un verrouillage de rotation en vue de stabiliser la position du chariot 1.

Dans une variante de réalisation le chariot 1 peut comprendre une seule roue directionnelle 32 équipée de préférence d'un système de frein 32a.

On obtient ainsi un chariot très stable, facilement manœuvrable et dont l'intérieur de la cuve est dépourvu de cavité susceptible de retenir du produit d'alimentation.

## Revendications

1. Chariot (1) roulant pour le transport et la distribution de produits d'alimentation pour animaux,
lequel chariot (1) comprend :
- une cuve (2) en matière plastique pour le stockage desdits produits d'alimentation, laquelle cuve (2) comprend une bordure périphérique de cuve (28) qui délimite une ouverture supérieure de cuve (29),
- un essieu (31) composé d'un axe d'essieu (311) et de deux roues d'essieu (312), lequel axe d'essieu (311) est porté par un support d'essieu (313),
- au moins une roue directionnelle (32) montée sur un support de roue(s) directionnelle(s) (33),
laquelle cuve (2) comprend une paroi de cuve (2a) délimitée par une surface externe de cuve (21) et une surface interne de cuve (22),
et laquelle cuve (2) comprend un plan médian longitudinal de cuve (M), deux parois d'extrémité (23, 24) traversées par ledit plan médian longitudinal de cuve (M), deux parois longitudinales (25, 26) et un fond de cuve (27),
la section dudit fond de cuve (27) perpendiculaire audit plan médian longitudinal de cuve (M) comprenant deux côtés de fond (271) qui convergent en direction d'une zone centrale de fond (272) située dans ledit plan médian longitudinal de cuve (M),
**caractérisé en ce que** ledit support d'essieu (313) se présente sous la forme d'un berceau d'essieu (313) qui est fixé sur ladite surface externe de cuve (21), de part et d'autre dudit plan médian longitudinal de cuve (M), au moyen de systèmes de fixation de type vis/écrous (5) qui traversent ladite paroi de cuve (2a).

2. Chariot (1) selon la revendication 1, **caractérisé en ce que** ledit support de roue(s) directionnelle(s) (33) se présente sous la forme d'un berceau support de roue(s) directionnelle(s) (33) qui est fixé sur ladite surface externe de cuve (21), de part et d'autre dudit plan médian longitudinal de cuve (M), au moyen de systèmes de fixation de type vis/écrous (5) qui traversent ladite paroi de cuve (2a).

3. Chariot (1) selon l'une quelconque des revendications 1 ou 2, **caractérisé en ce que** lesdits deux côtés de fond (271) sont à section en arc de cercle qui convergent en direction de ladite zone centrale de fond (272) en forme de ligne de fond ou de plan de fond,
ledit berceau d'essieu (313), et éventuellement ledit berceau support de roue(s) directionnelle(s) (33), comprenant deux ailes latérales (313c, 332) dont une face (313a1, 331a) est conformée pour épouser la forme desdits côtés de fond (271),
et **en ce que** lesdits systèmes de fixation de type vis/écrous (5) sont ménagés au niveau d'une partie supérieure desdites ailes latérales (313c, 332), et au niveau d'une partie supérieure desdits côtés de fond (271), à distance de ladite zone centrale de fond (272).

4. Chariot (1) selon la revendication 3, **caractérisé en ce que** les zones de contact entre la partie supérieure desdits côtés de fond (271) et la partie supérieure desdites ailes latérales (313c, 332) comprennent des méplats (313a1, 271a ; 331a, 271b) assurant un contact plan pour la fixation par lesdits systèmes de fixation de type vis/écrous (5).

5. Chariot (1) selon l'une quelconque des revendications 1 à 4, **caractérisé en ce que** lesdits systèmes de fixation de type vis/écrous (5) comprennent des vis dont les têtes (51) sont disposées du côté de ladite surface interne de cuve (22), lesquelles têtes de vis (51) ont une forme générale en dôme.

6. Chariot (1) selon l'une quelconque des revendication 4 ou 5, **caractérisé en ce qu'**il comprend un groupe d'une pluralité de systèmes de fixation de type vis/écrou (5) pour la fixation dudit berceau d'essieu (313), et éventuellement dudit berceau support de roue(s) directionnelle(s) (33), de part et d'autre dudit plan médian longitudinal de cuve (M).

7. Chariot (1) selon l'une quelconque des revendications 1 à 6, **caractérisé en ce qu'**il comprend un plan horizontal supérieur de roues d'essieu (P) par lequel passent les génératrices supérieures desdites roues d'essieu (312) en position normale d'appui au sol,
et **en ce que** lesdits systèmes de fixation de type vis/écrou (5) sont ménagés à proximité dudit plan horizontal supérieur de roues d'essieu (P).

8. Chariot (1) selon l'une quelconque des revendications 1 à 7, **caractérisé en ce que** lesdits deux côtés de fond (271) se prolongent par lesdites parois longitudinales (25, 26), planes, lesquelles parois longitudinales (25, 26) s'étendent vers le haut de manière divergente,
et **en ce que** lesdits systèmes de fixation de type vis/écrous (5) sont ménagés sur lesdits deux côtés de fond (271), à proximité desdites parois longitudinales (25, 26).

9. Chariot (1) selon l'une quelconque des revendications 1 à 8, **caractérisé en ce que** ledit berceau d'essieu (313) comprend une face supérieure (313a) de fixation contre ladite paroi de cuve (2a), et une face inférieure (313b), opposée à ladite face supérieure (313a), laquelle face inférieure (313b) comprend deux ailes latérales d'essieu (314) munies d'orifices (315) pour le passage de l'axe d'essieu (311), et une voûte d'appui demi cylindrique (316), pour l'appui dudit axe d'essieu (311), située entre lesdites ailes latérales d'essieu (314),
et **en ce que** ledit berceau d'essieu (313) comprend au moins un étrier de fixation (317), agencé pour fixer ledit axe d'essieu (311) dans ladite voûte d'appui demi cylindrique (316).

10. Chariot (1) selon la revendication 2, **caractérisé en ce que** ledit berceau support de roue(s) directionnelle(s) (33) comprend une face supérieure (331) de fixation contre ladite paroi de cuve (2a), et une face inférieure (333), opposée à ladite face supérieure (331), sur laquelle est fixée ladite au moins une roue directionnelle (32).
